(19) Europäisches Patentamt
European Patent Office
Office européen des brevets

(11) **EP 1 798 952 A1**

(12) **EUROPEAN PATENT APPLICATION**

(43) Date of publication:
**20.06.2007 Bulletin 2007/25**

(51) Int Cl.:
***H04N 1/46*** *(2006.01)*

(21) Application number: **06124508.0**

(22) Date of filing: **21.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.12.2005 JP 2005363866**

(71) Applicant: **CANON KABUSHIKI KAISHA**
**Ohta-ku**
**Tokyo 146-8501 (JP)**

(72) Inventor: **Shimada, Takuya**
**Tokyo 146-8501 (JP)**

(74) Representative: **TBK-Patent**
**Bavariaring 4-6**
**80336 München (DE)**

(54) **Image processing apparatus and method thereof and storage medium**

(57)     The present invention is related to an image processing apparatus and method that causes a color image forming apparatus to form a black-and-white image. Inputted image data is converted into a plurality of items of color component data corresponding to the color properties of the color image forming apparatus, according to the adjustment conditions, and the resulting converted image data is outputted to the color image forming apparatus, forming a black-and-white image.

# F I G. 7

```
        ┌──────────┐
        │  START   │
        └──────────┘
             │
             ▼
   ┌────────────────────┐
   │     INPUT GL       │───── S701
   └────────────────────┘
             │
             ▼
   ┌────────────────────┐
   │    ACQUIRE LAB     │───── S702
   └────────────────────┘
             │
             ▼
   ┌────────────────────┐
   │    ACQUIRE CMYK    │───── S703
   └────────────────────┘
             │
             ▼
   ┌────────────────────┐
   │    OUTPUT CMYK     │───── S704
   └────────────────────┘
             │
             ▼
        ┌──────────┐
        │   END    │
        └──────────┘
```

EP 1 798 952 A1

**Description**

BACKGROUND OF THE INVENTION

Field of the invention

The present invention relates to an image processing apparatus that processes image signals and outputs them to an image forming apparatus, and a method thereof.

Description of the Related Art

Use of digital color images is growing dramatically as a consequence of proliferation of digital cameras, and photo print technologies for making good prints of these images are drawing interest. At the same time, black-and-white photographs taken with pre-existing photographic film (silver halide film), i.e., non-digital (analogue) photography, constitute a popular trend. Different rendering means are being used to allow reproduction in such black-and-white prints of the characteristics of the subjects of these photographs with delicate flavor and rendering ability lacking in color photographs. Conversely, digital black-and-white photographic images taken with digital cameras are not used commonly as of this writing, as digital color images are. Going forward, however, it is conceivable that use of black-and-white photographic images taken with digital cameras may increase in a manner similar to that which has been seen with black-and-white photographs taken with photographic film.

Printing of black-and-white photographic image taken with digital cameras is achieved by using black coloring material. Given, however, that color tone (tint) of the black and white image is determined by the properties of the black coloring material in a case that the black and white image is printed solely using the black coloring material, it is not possible to adjust the color tone of the printed monochrome image. Accordingly, there exists a method that uses such color materials as cyan (C), magenta (M), Yellow (Y), and gray (G), in addition to black (K), to adjust the color tone in the black-and-white image. Doing so allows adjusting the color tone in the black-and-white image by changing the distribution levels of the various coloring materials (US-2005-0168495).

In reality, however, it is extremely difficult to suitably adjust the color tone of the black-and-white image taken with digital camera, and expertise is necessary to adjust the color tone of digital black-and-white image in a manner similar to that in black-and-white photograph using photographic film.

SUMMARY OF THE INVENTION

The objective of the invention is to resolve the foregoing problems with the prior art.

The feature of the invention is to offer an image processing apparatus and method capable of easily adjusting color tone (tint) of black-and-white images taken with digital cameras.

An image processing apparatus according to an aspect of the invention for achieving the objective comprises an assembly such as the following:

an image processing apparatus for causing a color image forming apparatus to form black-and-white images, characterised by comprising:

user interface means for inputting conditions for the adjustment of color tone of a black-and-white image; and color conversion means for converting input image data into a plurality of items of color component data corresponding to the color image forming apparatus, according to the adjustment conditions,

wherein the user interface means inputs the adjustment conditions for adjusting the color tone of the black-and-white image within the range of color tones that are reproducible on a black-and-white image printing paper.

An image processing method according to an aspect of the invention for achieving the objective comprises steps such as the following:

an image processing method for causing a color image forming apparatus to form black-and-white images, characterised by comprising the steps of:

inputting conditions from a user interface for the adjustment of color tone of a black-and-white image; and converting color data from an input image into a plurality of items of color component data corresponding to the color image forming apparatus, according to the adjustment conditions,

wherein the user interface inputs the adjustment conditions capable of adjusting the color tone of the black-and-white image within the range of color tones that are reproducible on a black-and-white image printing paper.

A storage medium according to an aspect of the invention for achieving the objective comprises steps such as the following:

a storage medium storing a computer program, capable of being loaded into a computer, that effects the various steps in the image processing method.

Further features of the present invention will become apparent from the following description of exemplary embodiments (with reference to the attached drawings).

BRIEF DESCRIPTION OF THE DRAWINGS

The accompanying drawings, which are incorporated in and constituted a part of the specification, illustrate embodiments of the invention and, together with the description, serve to explain the principles of the invention.

Fig. 1 depicts a view illustrating a signal flow pertaining to an image processing apparatus according to an embodiment;

Fig. 2A is a block diagram describing an outline of the hardware assembly of the image processing apparatus according to the embodiment;

Fig. 2B is a block diagram describing a functional construction of a color separator of the image processing apparatus according to the embodiment;

Fig. 3 depicts a view of illustrating an example of a color tone table according to the embodiment;

Fig. 4 depicts a view of illustrating an example of a device properties table according to the embodiment;

Fig. 5 depicts a view of illustrating an example of a gradation table;

Fig. 6 is a flowchart for explaining the sequence for generating the grading table pertaining to a color separation processor according to the embodiment;

Fig. 7 is a flowchart for explaining the signal conversion sequence for the color separator according to the embodiment;

Fig. 8 depicts a view illustrating an example of a user interface screen pertaining to the user interface unit according to the embodiment;

Fig. 9 is a schematic diagram for explaining the color tone adjustment range using a color tone adjustment slider bar according to the embodiment;

Fig. 10 depicts a view illustrating a modified example of a user interface screen pertaining to the user interface unit according to the embodiment;

Fig. 11 is a schematic diagram for explaining the color tone adjustment range using a color tone selection list box and the color tone adjustment slider bar;

Fig. 12 depicts a view illustrating a second modified example of a user interface screen of the user interface unit according to the embodiment;

Fig. 13 depicts a view illustrating a third modified example of a user interface screen of the user interface unit according to the embodiment;

Fig. 14 depicts a view illustrating a fourth modified example of a user interface screen for adjusting color tone;

Fig. 15 is a schematic diagram for explaining the color tone adjustment range using the color tone adjustment slider bar and a second color tone adjustment slider bar according to the fourth modified example;

Fig. 16 depicts a view illustrating an example of a conventional color tone adjustment user interface;

Fig. 17 is a schematic diagram for explaining the color tone adjustment range using the user interface in Fig. 16; and

Fig. 18 depicts a view illustrating an example of gradation properties according to the embodiment.

DESCRIPTION OF THE EMBODIMENTS

Embodiments of the present invention will now be described in detail in accordance with the accompanying drawings. Note that not all combinations of properties described in the embodiments are necessary to the solution proffered by the present invention, and the scope of the present invention is not limited to them.

Image Processing Apparatus Process Flow

The flow of signals pertaining to image processing apparatus will be described, according to the embodiment.

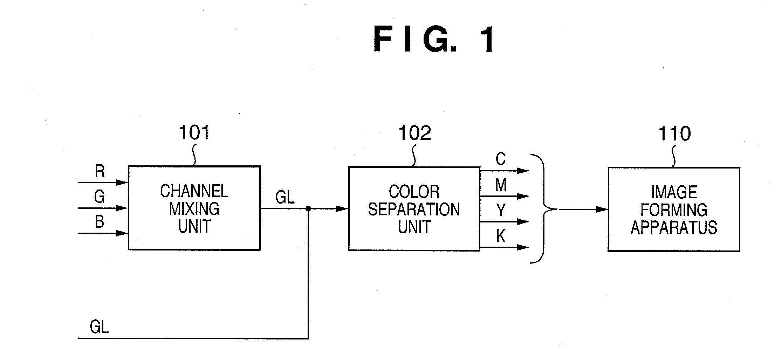

Fig. 1 depicts a view for explaining a signal flow pertaining to the image processing apparatus according to the embodiment.

The image processing apparatus uses a channel mixer 101 and a color separator 102 to convert RGB color signals expressing an input color image into CMYK color signals for a color image forming apparatus 110 that is connected to the image processing apparatus. The color separator 102 converts black-and-white signals GL expressing a black-and-white image into CMYK color signals for the color image forming apparatus 110. For present purposes, examples of image forming apparatus 110 might be a display apparatus or a print apparatus.

When printing a color image in black-and-white, the channel mixer 101 converts RGB color signals into black-and-white signals GL (lightness signal of the input color image). The channel mixer 101, for example, computes the black-and-white signals GL by taking a weighted average of the R, G, and B signals at prescribed weights. It is also permissible to compute the black-and-white signals GL by converting the inputted RGB signals into colorimetric color space L*a*b* color signals, and, for example, normalizing the L* signal into 255 gradations. It is also permissible to prepare a plurality of color signal conversion methods, and to facilitate selecting a conversion method to be used according to a direction from an external directive. Even more preferably, it would be desirable to convert color signals so as to derive results similar to those achieved by using a Y2 filter, a YA3 filter, or an R1 filter to photographic silver halide film. The color separator 102 also converts the black-and-white signals GL into the CMYK color signals for the color image forming apparatus 110, i.e., a plurality of items of color component data corresponding to the color image forming apparatus, according to the color gradation adjustment directives. Detailed explanations will follow.

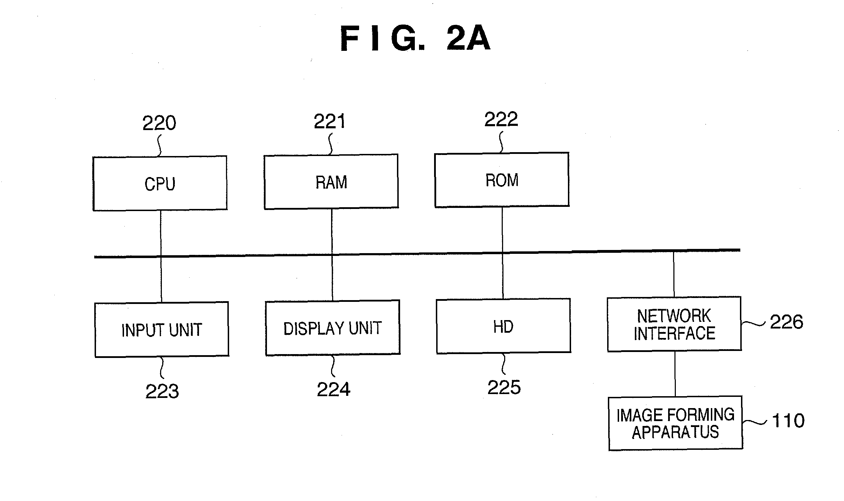

Fig. 2A is a block diagram for explaining an outline of the hardware construction of the image processing apparatus according to the embodiment.

According to the figure, a CPU 220 controls the overall operation of the image processing apparatus in accordance with a program stored in a RAM 221 and a ROM 222. The RAM 221 is used as CPU 220's memory, and the program executed by CPU 220 is also loaded therein. This program, for instance, encompasses programs for carrying out the processes described hereinafter. The RAM 221 also provides a work area that temporarily stores various types of data during control operations conducted by CPU 220. The ROM 222 stores a boot program and various types of data in a nonvolatile manner. An input unit 223, possessing a keyboard and a mouse or other pointing device, is used to input various types of data and commands through user manipulation. A display 224, possessing a CRT, LCD, or other display unit, is used to display data subject to processing, a user interface screen to be described hereinafter, and the like. An external storage unit (hard-disc) 225 is a large-capacity storage unit on which an operating system, various application programs or data, and the like are pre-installed, and the programs are loaded into the RAM 221 and executed when program activation directives are issued. A network interface 226 controls an interface with a LAN or other communication line. The color image forming apparatus 110 is connected via the interface 226 to the image processing apparatus.

Color Separator

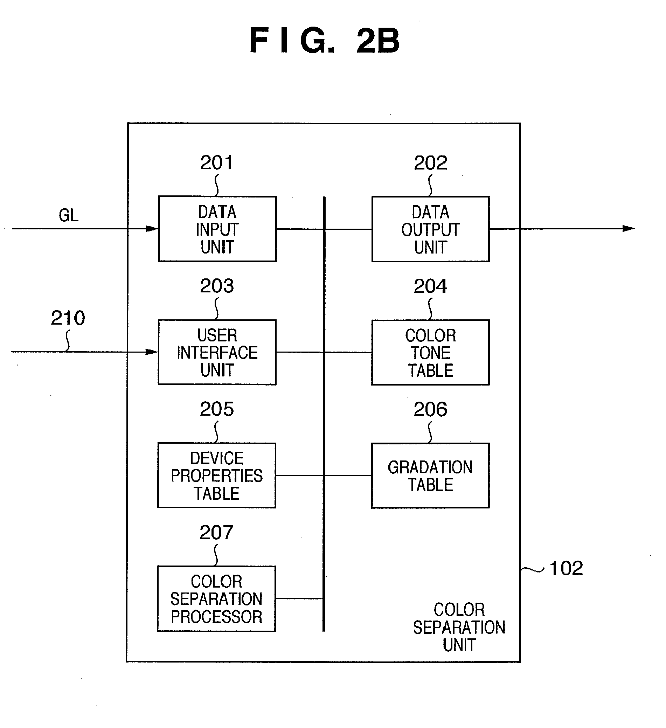

Fig. 2B is a block diagram describing a functional construction of the color separator 102 of the image processing apparatus according to the embodiment. While the functionality that constitutes the various units is achieved by the CPU 220 and its programs, it is also permissible to constitute the functionality in hardware. In Fig. 2B, tables 204-206, are stored in nonvolatile form in the hard disc unit 225, either pre-stored, or after being created in the RAM 221 according to a flowchart described hereinafter. These tables are then read out and queried by the program as required.

The color separator 102 contains a data input unit 201, a data output unit 202, a user interface unit 203, a color tone table 204, a device properties table 205, a gradation table 206, and a color separation processor 207. The data input unit 201 inputs the black-and-white signals GL. The black-and-white signals GL are converted to output CMYK color signals by the color separation processor 207, and output from the data output unit 202 to the color image forming apparatus 110. The user interface unit 203 possesses the input unit 223 and the display 224, and acquires a adjustment value 210 for a black-and-white photograph input via the input unit 223.

Limiting the adjustment range by way of the user interface unit 203 to a range appropriate to color tone of a black-and-white photograph according to the embodiment will simplify color tone adjustment, and prevent color tone adjustments inappropriate to black-and-white photography.

The color tone table 204 stores the adjustment value 210, as acquired by the user interface unit 203, and the relation between the adjustment value 210 and color tone of an image.

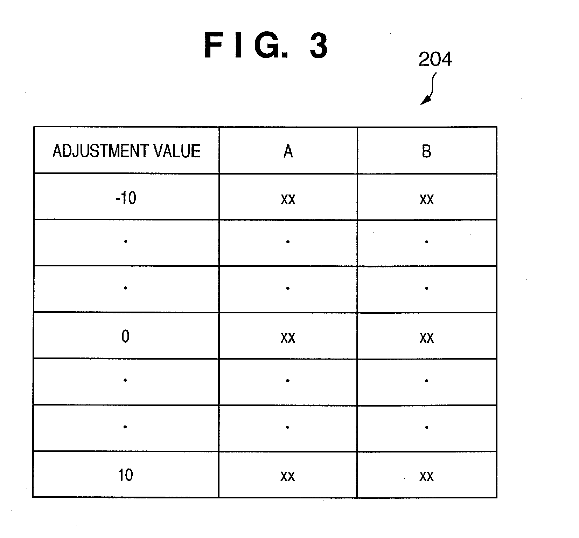

Fig. 3 depicts a view of illustrating an example of a color tone table according to the embodiment.

The color tone table 204 stores discrete adjustment values and their corresponding chroma (A, B). It is possible to solve for chroma corresponding to an arbitrary adjustment value between the discrete adjustment values, using well-known interpolation methods. For example, chroma (A, B) are chroma pertaining to intermediate lightness levels of output images, corresponding to the a, b of the colorimetric color signals L*a*b*, respectively. The image processing apparatus restricts chroma (A, B) to a range appropriate to the color tone of a black-and-white photograph.

The device properties table 205 corresponds to device-dependent discrete R'G'B' device color signals, wherein the device for these purposes in question is the color image forming apparatus 110, and maintains CMYK color signals and their corresponding LAB colorimetric color signals.

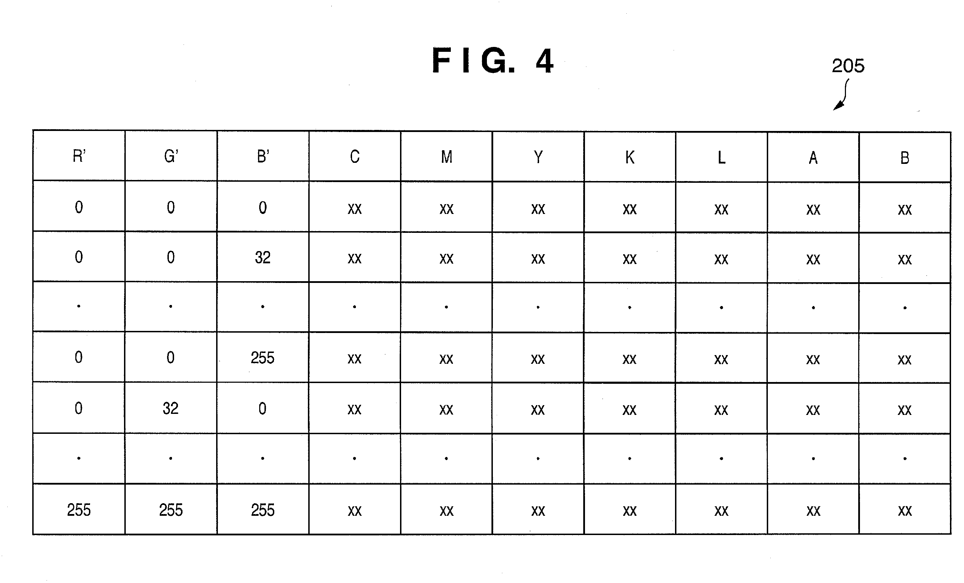

Fig. 4 depicts a view of illustrating an example of the device properties table 205 according to the embodiment.

The device properties table 205 stores device-dependent discrete R'G'B' device color signals, their corresponding coloring material's CMYK color signals, and their corresponding LAB colorimetric color signals. It is possible to solve for R'G'B' device color signals corresponding to arbitrary LAB colorimetric color signals between the discrete signal values, by way of interpolation and search methods using well-known 3-dimensional look-up tables (3DLUT). It is also possible to solve for CMYK color signals corresponding to R'G'B' device color signals, by way of well-known 3DLUT interpolation methods.

Interpolation and search methods such as these allow solving CMYK color signals corresponding to arbitrary LAB colorimetric color signals.

The color separation processor 207 generates the gradation table 206, based on the adjustment value 210 acquired by the user interface unit 203, the color tone table 204 and the device properties table 205.

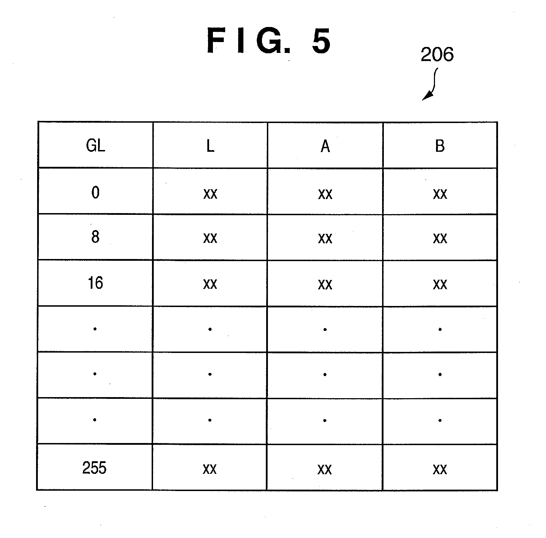

Fig. 5 depicts a view of illustrating an example of the gradation table 206 according to the embodiment.

The gradation table 206 stores discrete the black-and-white signals GL and their corresponding LAB colorimetric color signals. The sequence for generating the gradation table 206 will be described hereinafter.

The color separation processor 207 generates the gradation table 206 based on the adjustment value 210 acquired by user interface unit 203, the color tone table 204, and the device properties table 205. The color separation processor 207 converts the black-and-white signals GL into the CMYK color signals for the color image forming apparatus 110 in accordance with the gradation table 206 and the device properties table 205, and outputs them by way of the data output unit 202. The sequence for converting the black-and-white signals GL into the CMYK color signals for the color image forming apparatus 110 will be described hereinafter.

Sequence for Generation of The Gradation Table 206

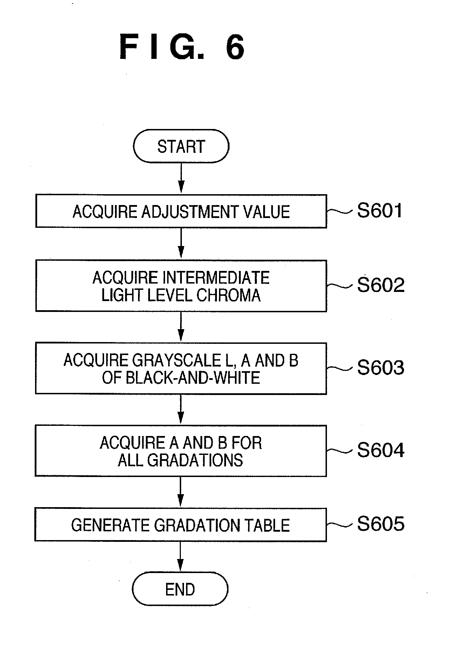

Fig. 6 is a flowchart for explaining the sequence for generating the grading table 206 pertaining to the color separation processor 207 according to the embodiment. The program that executes these processes is loaded into the RAM 221 from the hard disc unit (HD) 225, and executed under the control of the CPU 220.

In Step S601, the user interface unit 203 acquires the adjustment value 210. The process proceeds to Step S602, chroma (A, B) for intermediate lightness levels corresponding to the adjustment value 210 acquired in Step S601 is acquired from the adjustment value 210 and the color tone table 204 (Fig. 3). The process then proceeds to Step S603, a grayscale L signal and black and white chroma (A, B) are acquired from the device properties table 205. For these purposes, the grayscale refers to an aggregate of the R'=G'=B' (=GL) R'G'B' color signals. In Step S603, the L signal corresponding to the grayscale R'G'B' color signals is acquired from the device properties table 205, and a table is generated corresponding to the L signal and the black-and-white signals GL (R'=G'=B') of the gradation table 206. The relationship between the black-and-white signals GL and lightness level of print color in this instance depends on grayscale gradation properties of the color image forming apparatus 110. It is also possible to implement the present embodiment so as to reproduce black-and-white photographs with gradation properties other than those of the color image forming apparatus 110, in order to better reproduce the black-and-white photographs.

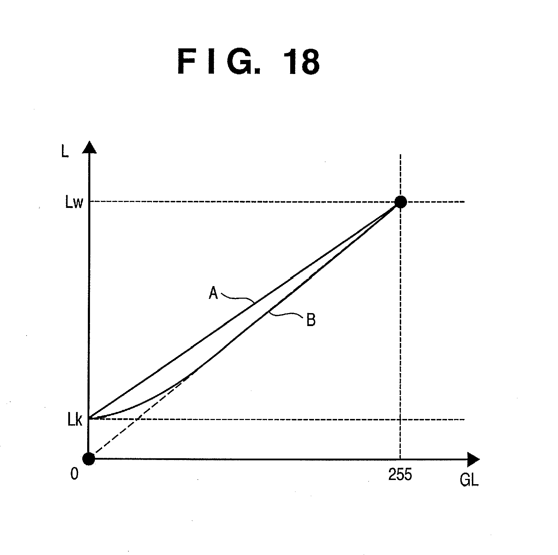

Fig. 18 depicts a view illustrating an example of gradation properties according to the embodiment.

In this diagram, Lk indicates the L signal (lightness level) of black, and Lw indicates the L signal (lightness level) of white. Line A (straight line) depicts gradation properties optimized to modification and adjustment without destruction of the L signal as related to the black-and-white signals GL, changed into linear form. Line B (curved line) is a line that follows (GL, L) = (0, Lk), closely tracing out a straight line between point ((GL, L) = (0, 0)) and point ((GL, L) = (255, Lw)), depicting gradation properties focusing on contrast.

It is also possible to constitute the present embodiment so as to generate a table corresponding to the black-and-white signals GL and L signal of the gradation table 206, according to the relationship between the black-and-white signals GL and the L signal as depicted in Fig. 18. This constitution is capable of switching relationships between the black-and-white signals GL and the L signal as appropriate to applications for better results. Black chroma is expressed by the A and B values of the LAB colorimetric color signals pertaining to R'=G'=B'=0. White chroma is expressed by the A and B values of the LAB colorimetric color signals pertaining to R'=G'=B'=255, wherein R'G'B' color signals respectively have eight bits.

In Step S604, chroma is derived for discrete black-and-white signals GL from the chroma of the intermediate lightness level acquired in Step S602 and the chroma of the black and white acquired in Step S603. At this point, a value (X) of chroma (A, B) of the black-and-white signals GL is derived by way of the formulae that follow. Note that for these purposes, Xk corresponds to the A and B values pertaining to black (GL=0), and Xw corresponds to the A and B values pertaining to white (GL=255). Additionally, Xg corresponds to the A and B values pertaining to the lightness level acquired in Step S602.

1.

If 0 <= GL < G1, then

X(GL) = GL(Xg - Xk)/G1 + Xk   ...Equation 1

2.

If G1 <= GL < G2, then

X(GL) = Xg         ...Equation 2

3.

If G2 <= GL <= 255, then

X(GL) = (GL - G2)(Xw - Xg)/(255 - G2) + Xg

...Equation 3

Note that G1 and G2 are constants that satisfy the range 0 < G1 < G2 < 255. If (G2 - G1) is large, i.e., G1 is small while G2 is large, it becomes possible to reproduce color tones (Xg) designated for adjustment within a wide range (G1 <= GL < G2). This may result in a tone jump, however, in which a highlight portion or a shadow portion drastically changes color tone. If (G2 - G1) is small, i.e., G1 is large while G2 is small, the tone jumping can be restrained, as changes of the color tones in highlight or shadow portion will be mild. At the same time, the range of reproducible color tones designated for adjustment is narrowed (G1 <= GL < G2). It is preferable for G1 and G2 to be set within ranges that tone jumping does not occur, and (G2 - G1) is large.

In Step S605, the gradation table 206 (Fig. 5) is generated from the L signal, acquired in Step S603, and the values A and B, acquired in Step S604.

Color Signal Conversion Sequence

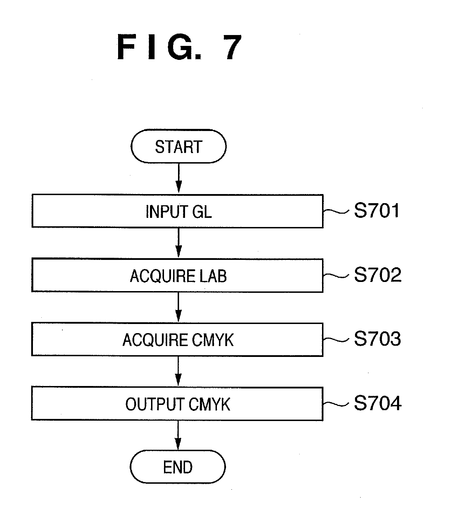

Fig. 7 is a flowchart explaining the signal conversion sequence for the color separator 102 according to the embodiment. Using the following sequence, the color separator 102 converts inputted signals, i.e., black-and-white signals GL, to output signals, i.e., the CMYK color signals for the color image forming apparatus 110. The program that executes these processes is loaded into the RAM 221 from the HD 225, and executed under the control of the CPU 220.

In Step S701, the black-and-white signals GL that constitute input image data are acquired by the data input unit 201. In Step S702, the gradation table 206 is searched and LAB colorimetric color signals corresponding to the black-and-white signals GL are acquired. In Step S703, the device properties table 205 (Fig. 4) is referred and the CMYK color signals corresponding to the LAB colorimetric color signals are acquired. Finally, in Step S704, the CMYK color signals are output by way of the data output unit 202 to the image forming apparatus 110.

Adjustment Range of Color Tone

As per the foregoing, the image processing apparatus prevents color tone adjustment inappropriate to black-and-white photographs by restricting color tone adjustment range. According to the embodiment, the color tone adjustment range is treated as the range of color tones that can be reproduced with black-and-white image print paper. Color tones of the black-and-white image print paper are typically distributed in the yellow and cyan directions, with users disliking red and green. Accordingly, the color tone adjustment range is widened in yellow and cyan directions, and narrowed in red and green. For example, the color tone adjustment range in color space L*a*b* is restricted to the ranges of -1.5 and 1.5 for the a* value, and -9 to 6 for the b* value. The color tones of the black-and-white image print paper are referred to as warm-black tone, with a strong yellow hue, neutral-black tone, with a neutral gray quality, and cool-black tone, with a strong blue hue. Namely, these three tones represent nearly all color tones for the black-and-white image print paper. Accordingly, the color tone adjustment range is restricted to the minimum range that includes warm-black tone, neutral-black tone, and cool-black tone. The silver halide film may also use sepia tones, in addition to these three tones. It is therefore desirable to restrict the color tone adjustment range to the minimum range that includes the warm-black tone, neutral-black tone, cool-black tone, and sepia.

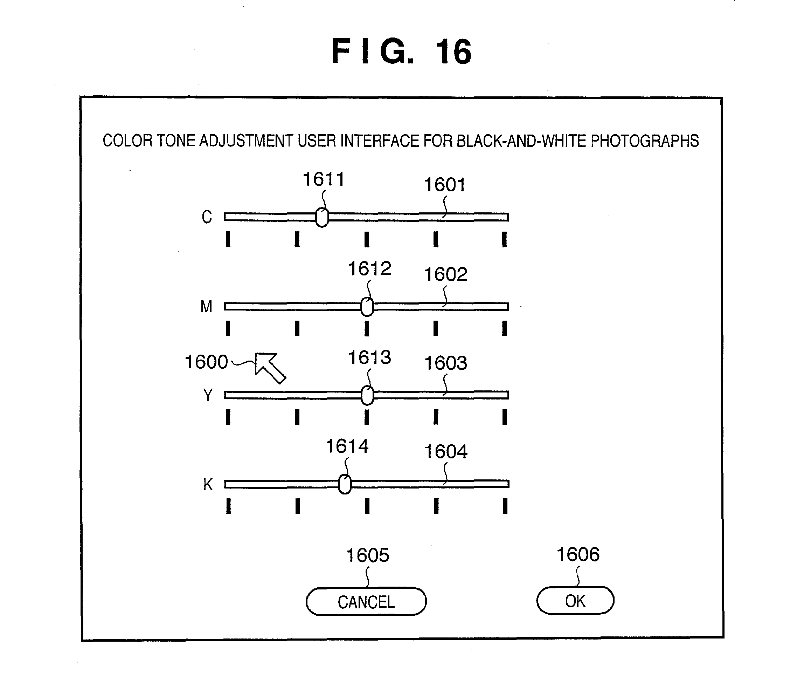

Fig. 16 depicts a view illustrating an example of a conventional color tone adjustment user that does not restrict the color tone adjustment range to the color tones that are reproducible on the black-and-white image printing paper.

The user interface in Fig. 16 adjusts color tones by increasing or reducing the CMYK color signal values for the color image forming apparatus 110. The user interface comprises a cyan signal adjustment slider bar 1601, a magenta signal adjustment slider bar 1602, a yellow signal adjustment slider bar 1603, a black signal adjustment slider bar 1604, a cancel button 1605, and an OK button 1606. The cyan signal adjustment slider bar 1601 is set to a cyan adjustment value $\Delta C$ by using a mouse cursor 1600 to move the cyan signal adjustment slider 1611 by drag operation. Moving the cyan signal adjustment slider 1611 to the center of the cyan signal adjustment slider bar sets the cyan adjustment value $\Delta C$ to zero. Moving the cyan signal adjustment slider 1611 to the left side of the cyan signal adjustment slider bar 1601 reduces the cyan adjustment value $\Delta C$, and moving the cyan signal adjustment slider 1611 to the leftmost end of the cyan signal adjustment slider bar 1601 sets the cyan adjustment value $\Delta C$ to, for example, "-32". Conversely, moving the cyan signal adjustment slider 1611 to the right side of the cyan signal adjustment slider bar 1601 increments the cyan adjustment value $\Delta C$, and moving the cyan signal adjustment slider 1611 to the rightmost end of the cyan signal adjustment slider bar 1601 sets the cyan adjustment value $\Delta C$ to, for example, "+32". Similarly, the magenta signal adjustment slider bar 1602 is set to a magenta adjustment value $\Delta M$ by moving a magenta signal adjustment slider 1612, the yellow signal adjustment slider bar 1603 is set to a yellow adjustment value $\Delta Y$ by moving a yellow signal adjustment slider 1613, and the black signal adjustment slider bar 1604 is set to a black adjustment value $\Delta K$ by moving a black signal adjustment slider 1614. The cancel button 1605 cancels the color tone adjustment results. If the cancel button 1605 is directed, then the adjustment values are reset to pre-adjustment values, and color tone adjustment ends. The OK button 1606 makes the color tone adjustment results effective. If the OK button 1606 is directed, the adjustment values are locked in, and the color tone adjustment process ends. Given the standard color tones relationship pertaining to the black-and-white signals GL and the CMYK color signals for the color image forming apparatus 110, the relationship between post-color tone adjustment black-and-white signals GL and C'M'Y'K' color signals for the color image forming apparatus 110 can be derived using the following formulae:

$$C' = C + \Delta C$$

$$M' = M + \Delta M$$

$$Y' = Y + \Delta Y$$

$$K' = K + \Delta K \qquad \text{...Equation 4}$$

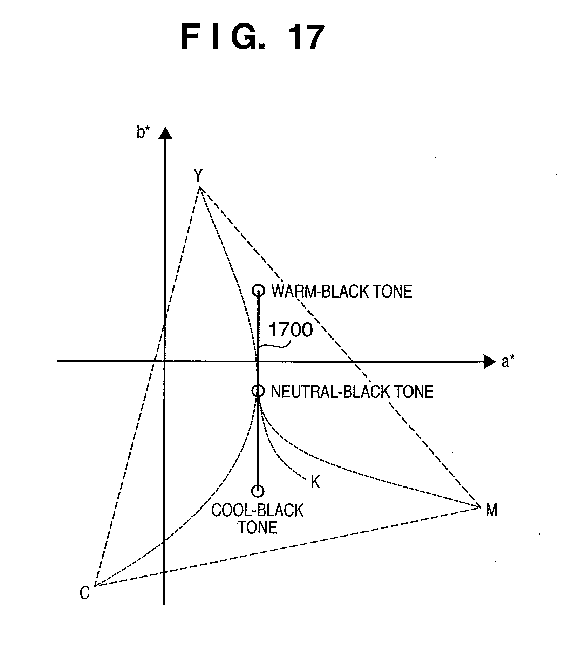

Fig. 17 a schematic diagram for explaining the color tone adjustment range using the user interface in Fig. 16. The range of chroma points that change as a result of moving the cyan signal adjustment slider 1611, the magenta signal adjustment slider 1612, the yellow signal adjustment slider 1613, and the black signal adjustment slider 1614 are depicted schematically herein.

As depicted in Fig. 17, it is possible to have the color tone adjustments inappropriate to the black-and-white photographs that transgress the range (lines) of color tones that are reproducible on the black-and-white image printing paper, as depicted in the union of the warm-black tone, neutral-black tone, and cool-black tone in 1700, as per the user interface in Fig. 16. Adjusting the range of color tones that are reproducible on the black-and-white image printing paper in 1700 requires setting an appropriate balance among the cyan signal adjustment slider 1611, the magenta signal adjustment slider 1612, the yellow signal adjustment slider 1613, and the black signal adjustment slider 1614, and if the balance is disrupted, printing happens with color tones that cannot be normally found in the black-and-white image printing paper. Hue differentiation is difficult because color tones of the black-and-white photographs fall into an achromatic range, with expertise being necessitated in order to accurately decide to what extent the cyan, magenta, yellow, and black signals should be adjusted in order to reproduce the target color tones.

Adjustment User Interface

According to the embodiment, the image processing apparatus has its range of color tones restricted to the range of color tones that are reproducible on the black-and-white image printing paper by way of comprising the color tone table 204 and a user interface which will be described hereinafter, which facilitates the color tone adjustment appropriate to the black-and-white photographs.

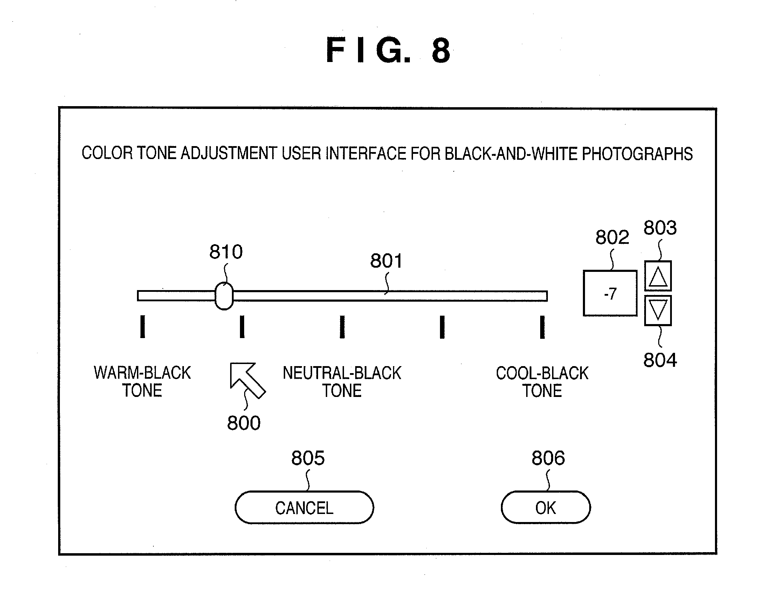

Fig. 8 depicts a view illustrating an example of a user interface screen pertaining to the user interface unit 203 according to the embodiment.

The user interface 203 comprises a color tone adjustment slider bar 801, a text box 802, an adjustment value increment button 803, an adjustment value decrement button 804, a cancel button 805, and an OK button 806, according to the embodiment. The color tone adjustment slider bar 801 sets color tone by using a mouse cursor 800 using the input unit 223 to move a slider 810 by drag operation. Moving the slider 810 to the leftmost end of the slider bar 801 sets the color tone to warm-black tone, while moving the slider 810 to the rightmost end sets the color tone to cool-black tone. Moving the slider 810 to the middle of the slider bar 801 sets the color tone to neutral-black tone. In such circumstances, the configuration is set to remain within the range of color tones that are reproducible on the black-and-white image printing paper, regardless of where on the slider bar 801 the slider 810 may be moved to.

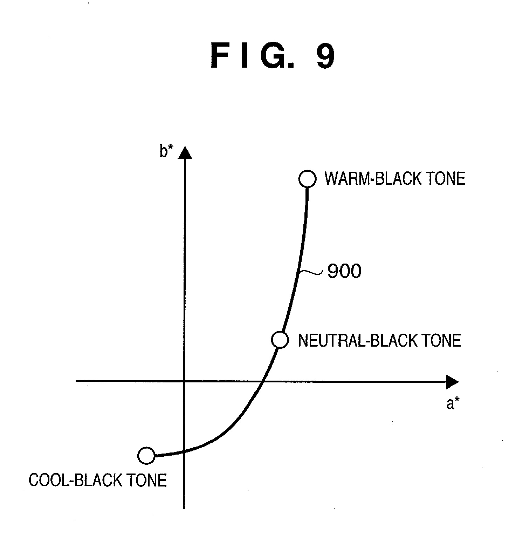

Fig. 9 is a schematic diagram for explaining the color tone adjustment range using the color tone adjustment slider bar 801 according to the embodiment. In these circumstances, the trace of chroma points changing by moving the slider 810 is depicted. With the user interface unit 203, according to the embodiment depicted in Fig. 9, it is possible to adjust color tones for the black-and-white photographs across the range from the warm-black tone, i.e., the leftmost end of the slider 810, through neutral-black tone, i.e., the center, to the cool-black tone, i.e., the rightmost end.

The text box 802 in Fig. 8 displays the color tone adjustment value. The color tone adjustment value is set, for example, to read "-10" when the slider 810 is moved to the leftmost end, "0" when the slider 810 is moved to the center, and "+10" when the slider 810 is moved to the rightmost end. The text box 802 displays the adjustment value as it changes according to the position of the slider 810. It is also permissible to input the adjustment values directly into the text box 802. In such instances, the position of the slider 810 on the color tone adjustment slider bar 801 moves to a position corresponding to the adjustment value that has been input into the text box 802.

The adjustment value increment button 803 and adjustment value decrement button 804 are for directing incrementing and decrementing of the adjustment value. Directing, i.e., clicking, the adjustment value increment button 803 increments the adjustment value by only one step, and the updated adjustment value is displayed in the text box 802. In such instances, the position of the slider 810 on the color tone adjustment slider bar 801 also rightwards moves to a position corresponding to the adjustment value. Directing, i.e., clicking, the adjustment value decrement button 804 decrements the adjustment value by only one step, and the updated adjustment value is displayed in the text box 802. In such instances, the position of the slider 810 on the color tone adjustment slider bar 801 also leftwards moves to a position corresponding to the adjustment value.

The cancel button 805 cancels the color tone adjustment results. When the cancel button 805 is directed, the adjustment values are reset to pre-adjustment values, and the color tone adjustment ends. The OK button 806 makes the color tone adjustment results effective. If the OK button 806 is directed, then the adjustment values are locked in, and the color tone adjustment ends.

First Modified Example of User Interface Unit

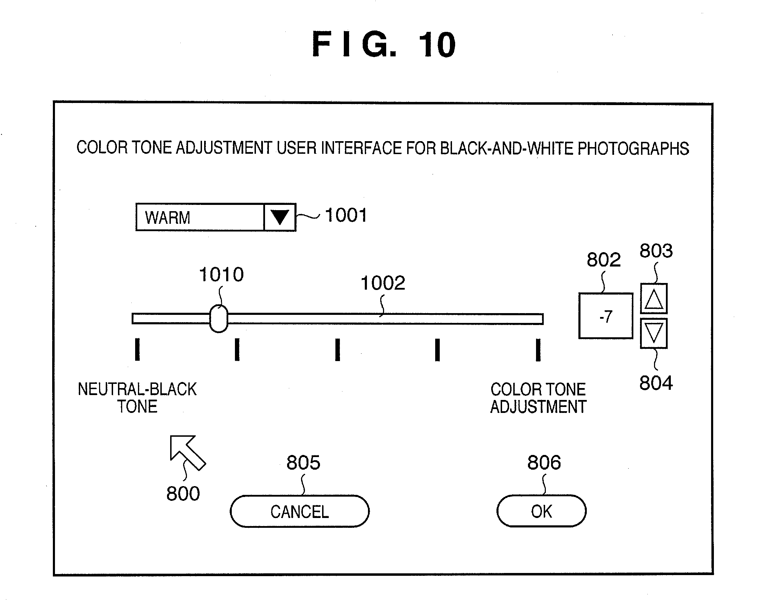

Fig. 10 depicts a view illustrating the modified example of a user interface screen pertaining to the user interface unit 203 according to the embodiment. Descriptions will be omitted and identical markings appended in Fig. 10 for those constituents that are identical to the user interface unit 203 in Fig. 8.

The user interface unit pertaining to the modified example possesses a color tone selection list box 1001, a color tone adjustment slider bar 1002, the text box 802, the adjustment value increment button 803, the adjustment value decrement button 804, the cancel button 805, and the OK button 806. The color tone selection list box 1001 selects the target color tone from a list. This list possesses, for example, "warm", "cool" and "sepia" options. The color tone is set according to position of a slider 1010 on the color tone adjustment slider bar 1002 and the color tone selected with the color tone selection list box 1001. Moving the slider 1010 to the leftmost end of the color tone adjustment slider bar 1002 sets the color tone to warm-black tone, while moving the slider 1010 to the rightmost end sets the color tone to the color tone selected with the color tone selection list box 1001.

If "warm" is selected with the color tone selection list box 1001, moving the position of the slider 1010 on the color tone adjustment slider bar 1002 changes the color tone within a range being from a neutral-black tone to the warm-black tone. Similarly, if "cool" is selected with the color tone selection list box 1001, moving the position of the slider 1010 on the color tone adjustment slider bar 1002 changes the color tone within a range being the neutral-black tone to the cool-black tone. Similarly, if "sepia" is selected with the color tone selection list box 1001, moving the position of the slider 1010 on the color tone adjustment slider bar 1002 changes the color tone from the neutral-black tone to the sepia color tone range. In such circumstances, the configuration is set to remain within the range of color tones that are reproducible on the black-and-white image printing paper, regardless of where on the slider bar 1002 the slider 1010 may be moved to.

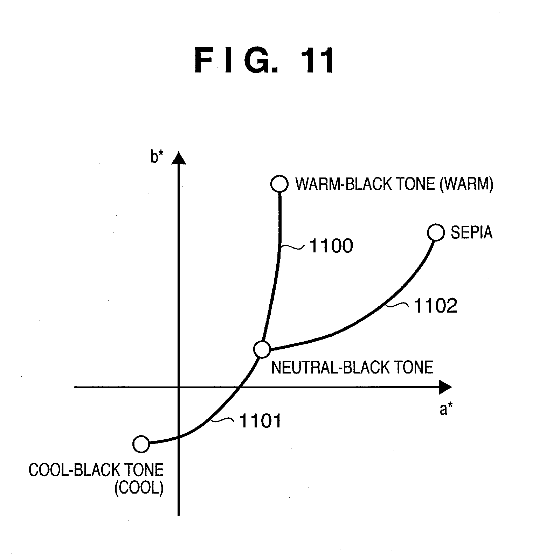

Fig. 11 is a schematic diagram for explaining the color tone adjustment range using the color tone selection list box 1001 and the color tone adjustment slider bar 1002, and the trace of chroma points changing by moving the slider 1010 on the slider bar 1002 is depicted.

According to the embodiment, the user interface unit 203 allows adjusting the color tones of the black-and-white photograph with a line 1100 color tone that joins neutral-black tone with warm-black tone, a line 1101 that joins the neutral-black tone with cool-black tone, and a line 1102 that joins the neutral-black tone with sepia color tone. In other words, if "warm" is selected with the color tone selection list box 1001, the color tone changes according to the position of the slider 1010, along the line 1100. If "sepia" is selected with the color tone selection list box 1001, the color tone changes according to the position of the slider 1010, along the line 1102. Similarly, if "cool" is selected with the color tone selection list box 1001, the color tone changes according to the position of the slider 1010, along the line 1101.

Second Modified Example of User Interface Unit

The second modified example of the user interface unit 203 is distinguished according to the embodiment by categorizing the black-and-white signal into a plurality of groups by size, and carrying out the color tone adjustment on a per group basis. For example, color tones for shadow, intermediate, or highlight are adjusted separately from one another. It is permissible to use the user interface described using Fig. 8, or the user interface described using Fig. 10 for adjustment of group color tones.

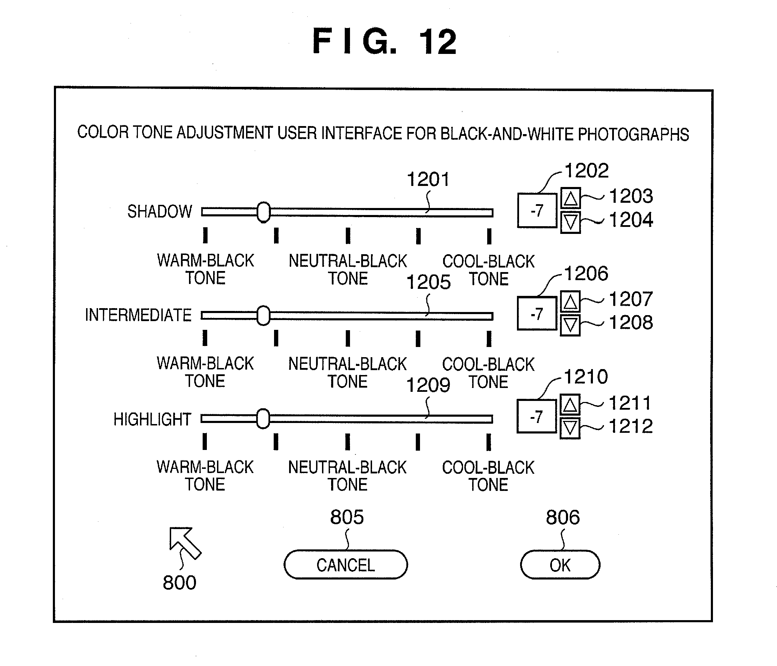

Fig. 12 depicts a view illustrating the second modified example of a user interface screen of the user interface unit 203 according to the embodiment. Descriptions will be omitted and identical markings appended for those constituents that are identical to Fig. 8.

In these circumstances, color tone adjustment slider bars 1201, 1205, and 1209 have the same constitution as the color tone adjustment slider bar 801 in Fig. 8. Similarly, text boxes 1202, 1206, and 1210 have the same constitution as the text box 802 in Fig. 8. Furthermore, adjustment value increment buttons 1203, 1207, and 1211 have the same constitution as the adjustment value increment button 803 in Fig. 8. Adjustment value decrement buttons 1204, 1208, and 1212 have the same constitution as the adjustment value decrement button 804 in Fig. 8.

Third Modified Example of User Interface Unit

The third modified example of the user interface unit 203 is distinguished by changing default color tone or color tone adjustment range according to the contents of an image. Typically, color tones of the warm class are preferable for portrait images, and color tones of the cool class are preferable for metallic images. Strongly bluish color tones of the cool class are disliked for portrait images. Therefore, changing default color tone according to the contents of image allows printing the black-and-white photograph with appropriate color tones with ease. Additionally, changing color tone adjustment range according to the contents of image allows preventing printing with color tones not favored by a user.

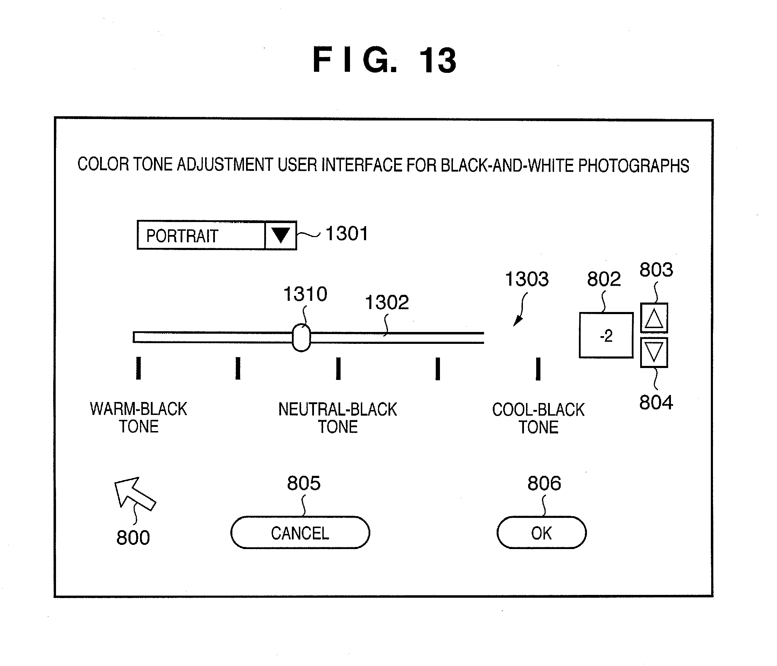

Fig. 13 depicts a view illustrating the third modified example of a user interface screen of the user interface unit according to the. Descriptions will be omitted and identical markings appended for those constituents that are identical to Fig. 8.

The user interface possesses a scene selection list box 1301, a color tone adjustment slider bar 1302, the text box 802, the adjustment value increment button 803, the adjustment value decrement button 804, the cancel button 805, and the OK button 806.

The scene selection list box 1301 selects an image scene (contents of image) from a list. This list possesses, for example, portrait, landscape, and metallic options. Default color tone and color tone adjustment range are configured corresponding to scene classification selected in the scene selection list box 1301.

If portrait is selected in the scene selection list box 1301, the default color tone is made somewhat warmer than the neutral-black tone, i.e., into the warm-black tone area. The color tone adjustment range is narrowed in the cool zone, i.e., the cool-black tone area.

If landscape is selected in the scene selection list box 1301, the default color tone is set to the neutral-black tone. Furthermore, if metallic is selected in the scene selection list box 1301, the default color tone is made somewhat cooler than the neutral-black tone, i.e., into the cool-black tone area. The color tone adjustment range is narrowed in the warm zone, i.e., the warm-black tone area.

The color tone adjustment slider bar 1302 sets the color tone, by way of a slider 1310. Moving the slider 1310 to the leftmost end of the slider bar 1302 sets the color tone to warm-black tone, while moving the slider 1310 to the rightmost end sets the color tone to cool-black tone. Moving the slider 1310 to the middle of the slider bar 1302 sets the color tone to the neutral-black tone. The initial position of the slider 1310 moves to a position corresponding to the default color tone appropriate to the scene (contents) selected in the scene selection list box 1301. For example, if portrait is selected in the scene selection list box 1301, the position of the slider 1310 on the color tone adjustment slider bar 1302 moves to the somewhat warmer than the neutral-black tone, i.e., into the warm-black tone area, to reflect the default color tone. Similarly, if metallic is selected in the scene selection list box 1301, the position of the slider 1310 moves to the somewhat cooler than the neutral-black tone, i.e., into the cool-black tone area, to reflect the default color tone.

Furthermore, the range within which the slider 1310 may actually move, with regard to the color tone adjustment range, also varies with the scene selected in the scene selection list box 1301. For example, if portrait is selected in the scene selection list box 1301, the cooler zone of the slider bar 1302, i.e., the cool-black tone area, is displayed in a gray-out manner, such as that depicted in 1303. And the slider 1310 is prevented from moving into the grayed-out segment 1303.

Fourth Modified Example of User Interface Unit

The fourth modified example of the user interface unit is distinguished by possessing a first color tone adjustment unit that adjusts color tone in the yellow and cyan directions, and a second color tone adjustment unit that makes fine adjustments to color tone in the red and green directions.

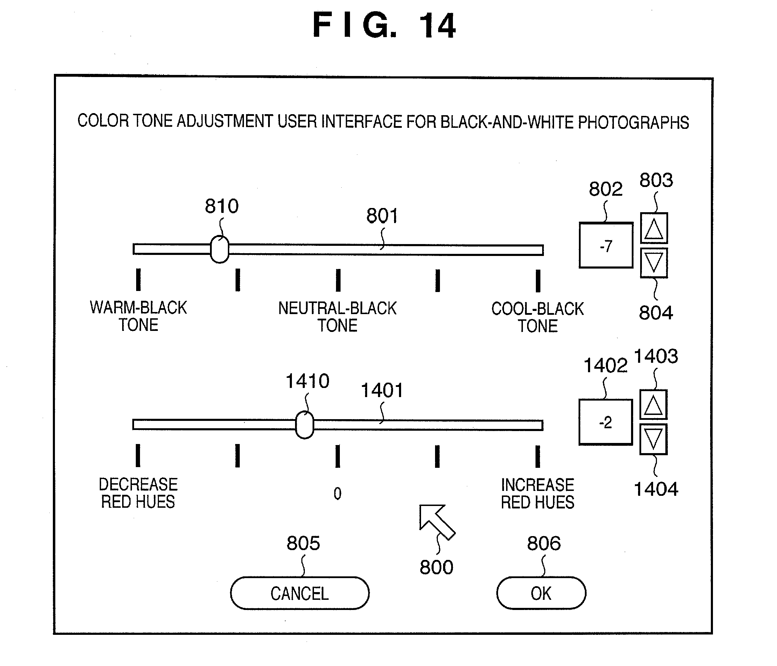

Fig. 14 depicts a view illustrating the fourth example of a user interface screen for adjusting color tone.

The user interface possesses a second color tone adjustment slider bar 1401, a second color tone adjustment text box 1402, a second color tone adjustment value increment button 1403, and a second color tone adjustment value decrement button 1404, in addition to the arrangement of the user interface in Fig. 8. The second color tone adjustment text box 1402 has the same constituency as the text box 802 in Fig. 8, and the second color tone adjustment value increment button 1403 has the same constituency as the adjustment value increment button 803 in Fig. 8. Furthermore, the second color tone adjustment value decrement button 1404 has the same constituency as the adjustment value decrement button 804 in Fig. 8. Descriptions of these portions will be omitted accordingly.

In Fig. 14, the color tone adjustment slider bar 801 primarily sets color tone in the yellow and cyan directions, by way of the slider 810. Moving the slider 810 to the leftmost end of the slider bar 801 sets the color tone to warm-black tone (strongly yellow hued color tone), while moving the slider 810 to the rightmost end sets the color tone to cool-black tone (strongly blue hued color tone), and moving the slider 810 to the middle of the slider bar 801 sets the color tone to the neutral-black tone.

The second color tone adjustment slider bar 1401 primarily sets color tone in the red and green directions, by way of the slider 1410. Moving the slider 1410 to the left increases red hues, while moving the slider 1410 to the right decreases red hues.

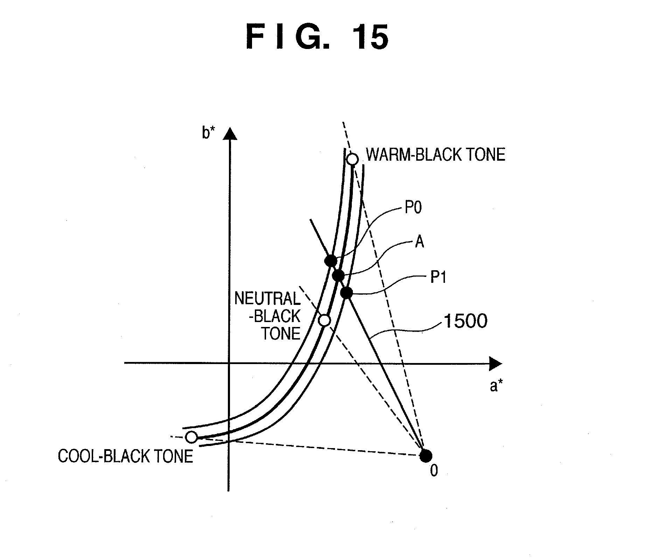

Fig. 15 is a schematic diagram for explaining the color tone adjustment range using the color tone adjustment slider bar 801 and the second color tone adjustment slider bar 1401 according to the fourth modified example.

The second color tone adjustment slider bar 1401 performs fine color tone adjustments in the adjustment range from a point P0 to a point P1 on a line 1500 that connects a prescribed chroma point O and a chroma point A, the latter of which is specified by the position of the slider 810 on the color tone adjustment slider bar 801.

The objective of the present invention need not be outputting the CMYK color signal to the connected color image forming apparatus 110. If the color image forming apparatus 110 is a printer containing gray ink or pale ink, color signals including these color signals will be output to the printer. In a case that the color image forming apparatus 110 inputs RGB signals, such as a display monitor, it is permissible to constitute the image processing apparatus to output RGB color signals the image forming apparatus 110.

Nor is the objective of the present invention dependent on a color signal conversion sequence. Inputted black-and-white signals are converted to colorimetric color signals, which are in turn converted into the color signal (output signal)for the color image forming apparatus 110, according to the embodiment. It would also be permissible, however, to integrate the gradation table and device properties table and directly convert the inputted black-and-white signals to output signals for the color image forming apparatus 110.

Other embodiments

The present invention is capable of achieving the supply of a software program that achieves the functionality of the preceding embodiments, either directly or remotely to the system or apparatus, and loading the program so supplied into a computer in the system or apparatus, and executing the program therein. In these circumstances, if the program functions are present, the format need not be that of a program.

Hence, in order to achieve the function processing of the present invention with the computer, the program code itself that is installed on the computer will also achieve the present invention. In other words, the claims of the present invention include the very computer program for achieving the function processing of the present invention. In these circumstances, the format of the program is inconsequential, provided that the program functions are present; it may take such forms as object code, a program executed by an interpreter, or a script supplied to the operating system, among others.

A variety of things may be used as a storage medium for supping the program. Examples include, but are not limited to, floppy disks, hard drives, optical discs, magneto-optical disks, CD-ROMs, CD-Rs, CD-RWs, magnetic tape, non-volatile memory cards, ROM, and DVDs, i.e., DVD-ROM or DVD-R.

As other program supply methods, the program may also be supplied by using a browser on a client computer to connect to an Internet webpage and download the program from the website to a hard drive or other storage medium. In such circumstances, the download may be the very computer program of the present invention, or a compressed file containing an automated installation function. It would also be possible to execute the program of the present invention by segmenting the program code that constitutes the program into a plurality of files, and downloading each of the respective files from a different webpage. In other words, web servers that facilitate downloads of program files to a plurality of end users that achieve the function processing of the present invention with computers are also contained within the claims of the present invention.

The programs of the present invention may also take the form of being encrypted, loaded onto a CD-ROM or other storage medium, and distributed to end users. In such circumstances, end users who satisfy prescribed conditions will be allowed to download from a webpage, via the Internet, key information that will decrypt the encryption, and using the key information will install the encrypted program on the computer in an executable form.

It would also be possible to achieve, by the computer executing the loaded program, in a form other than that of the form in which the functions according to the embodiment are achieved. For example, it would be possible to have the operating system running on the computer, or other system, perform the actual processing, in whole or in part, according to the program's commands, and achieve the functions according to the embodiment by way of the processing.

It is further permissible to have the program that is loaded from the storage medium be written into memory that is built into an expansion board that is plugged into the computer, or into an expansion unit that is connected to the computer. In such circumstances, a CPU or other unit that is built into the expansion board or expansion unit performs the actual processing, in whole or in part, according to the program's commands, and achieves the functions according to the embodiment by way of the processing.

The present invention is related to an image processing apparatus and method that causes a color image forming apparatus to form a black-and-white image. Inputted image data is converted into a plurality of items of color component data corresponding to the color properties of the color image forming apparatus, according to the adjustment conditions, and the resulting converted image data is outputted to the color image forming apparatus, forming a black-and-white image.

**Claims**

1. An image processing apparatus for causing a color image forming apparatus to form a black-and-white image, **characterised by** comprising:

   user interface means (203) for inputting adjustment conditions for the adjustment of the color tone of a black-and-white image; and
   color conversion means (102) for converting input image data to a plurality of items of color component data corresponding to the color image forming apparatus, in accordance with the adjustment conditions,

   **characterized in that** said user interface means inputs the adjustment conditions for adjusting the color tone of the black-and-white image within the range of color tones that are reproducible on a black-and-white image printing paper.

2. The image processing apparatus according to claim 1, **characterised in that** said color conversion means includes a conversion table for converting the adjustment conditions into chroma of the black-and-white image.

3. The image processing apparatus according to claim 1 or 2, **characterised in that** said color conversion means includes a gradation table corresponding to the grayscale, generated by the chroma and chroma of a white point and chroma of a black point of the color image forming apparatus.

4. The image processing apparatus according to any one of claims 1-3, **characterised in that** said color conversion means converts the input image data into data in the range of color tones that are reproducible on the black-and-white image printing paper in accordance with the chroma and grayscale, and converts the converted input image data into the plurality of items of color component data.

**5.** The image processing apparatus according to any one of claims 1-4, **characterised in that** the range of color tones that are reproducible on the black-and-white image printing paper is a range that adjusts a black-and-white color tone from a neutral-black tone to a warm-black tone, and from the neutral-black tone to a cool-black tone.

**6.** The image processing apparatus according to any one of claims 1-4, **characterised in that** the range of color tones that are reproducible on the black-and-white image printing paper has a wide range in yellow and cyan directions, and a narrow range in red and green directions.

**7.** The image processing apparatus according to any one of claims 1-4, **characterised in that** the range of color tones that are reproducible on the black-and-white image printing paper is changed according to the content of the black-and-white image.

**8.** An image processing method for causing a color image forming apparatus to form black-and-white images, **characterised by** comprising the steps of:

inputting conditions from a user interface for the adjustment of color tone of a black-and-white image; and converting color data from an input image into a plurality of items of color component data corresponding to the color image forming apparatus, according to the adjustment conditions,

**characterized in that** the user interface inputs the adjustment conditions capable of adjusting the color tone of the black-and-white image within the range of color tones that are reproducible on a black-and-white image printing paper.

**9.** The image processing method according to claim 8, **characterized in that** in said converting step, chroma of the black-and-white image corresponds to the adjustment conditions.

**10.** The image processing method according to claim 8 or 9, **characterized in that** said converting step contains a grayscale that is generated from the chroma and chroma of a white point and a black point of the color image forming apparatus.

**11.** The image processing method according to any one of claims 8-10, **characterized in that** in said converting step, the color data of the input image data is converted into data in the range of color tones that are reproducible on the black-and-white image printing paper in accordance with the chroma and grayscale.

**12.** The image processing method according to any one of claims 8-11, **characterized in that** the range of color tones that are reproducible on the black-and-white image printing paper is a range that adjusts color tone of the black-and-white image from a neutral-black tone to a warm-black tone, and from the neutral-black tone to a cool-black tone.

**13.** The image processing method according to any one of claims 8-11, **characterized in that** the range of color tones that are reproducible on the black-and-white image printing paper has a wide range in yellow and cyan directions, and a narrow range in red and green directions.

**14.** The image processing method according to any one of claims 8-11, **characterized in that** the range of color tones that are reproducible on the black-and-white image printing paper is changed according to the content of the black-and-white image.

**15.** A storage medium storing a computer program, capable of being loaded into a computer, that effects the various steps in the image processing method according to any one of claims 8-14.

# FIG. 1

EP 1 798 952 A1

# F I G. 2A

EP 1 798 952 A1

# F I G. 2B

201
DATA
INPUT
UNIT

202
DATA
OUTPUT
UNIT

GL

203
USER
INTERFACE
UNIT

204
COLOR
TONE
TABLE

210

205
DEVICE
PROPERTIES
TABLE

206
GRADATION
TABLE

207
COLOR
SEPARATION
PROCESSOR

~102

COLOR
SEPARATION
UNIT

# F I G. 3

204

| ADJUSTMENT VALUE | A | B |
|---|---|---|
| -10 | xx | xx |
| . | . | . |
| . | . | . |
| 0 | xx | xx |
| . | . | . |
| . | . | . |
| 10 | xx | xx |

# FIG. 4

EP 1 798 952 A1

205

| R' | G' | B' | C | M | Y | K | L | A | B |
|----|----|----|---|---|---|---|---|---|---|
| 0 | 0 | 0 | XX | XX | XX | XX | XX | XX | XX |
| 0 | 0 | 32 | XX | XX | XX | XX | XX | XX | XX |
| . | . | . | . | . | . | . | . | . | . |
| 0 | 0 | 255 | XX | XX | XX | XX | XX | XX | XX |
| 0 | 32 | 0 | XX | XX | XX | XX | XX | XX | XX |
| . | . | . | . | . | . | . | . | . | . |
| 255 | 255 | 255 | XX | XX | XX | XX | XX | XX | XX |

# F I G. 5

206

| GL | L | A | B |
|-----|-----|-----|-----|
| 0 | xx | xx | xx |
| 8 | xx | xx | xx |
| 16 | xx | xx | xx |
| · | · | · | · |
| · | · | · | · |
| · | · | · | · |
| 255 | xx | xx | xx |

# F I G. 6

START

ACQUIRE ADJUSTMENT VALUE — S601

ACQUIRE INTERMEDIATE
LIGHT LEVEL CHROMA — S602

ACQUIRE GRAYSCALE L, A AND B
OF BLACK-AND-WHITE — S603

ACQUIRE A AND B FOR
ALL GRADATIONS — S604

GENERATE GRADATION TABLE — S605

END

# F I G. 7

START

INPUT GL — S701

ACQUIRE LAB — S702

ACQUIRE CMYK — S703

OUTPUT CMYK — S704

END

# F I G. 8

EP 1 798 952 A1

COLOR TONE ADJUSTMENT USER INTERFACE FOR BLACK-AND-WHITE PHOTOGRAPHS

810    801    802  803

-7

804

WARM-BLACK
TONE

NEUTRAL-BLACK
TONE

COOL-BLACK
TONE

800

805    806

CANCEL    OK

# F I G. 9

# F I G. 10

COLOR TONE ADJUSTMENT USER INTERFACE FOR BLACK-AND-WHITE PHOTOGRAPHS

WARM ▼ ~1001

1010      1002      802  803

-7  △
   ▽

NEUTRAL-BLACK      COLOR TONE      804
TONE               ADJUSTMENT

↖
800      805        806
   CANCEL      OK

EP 1 798 952 A1

# F I G. 11

# F I G. 12

COLOR TONE ADJUSTMENT USER INTERFACE FOR BLACK-AND-WHITE PHOTOGRAPHS

SHADOW

1201

1202
-7 △ ~1203
▽ ~1204

WARM-BLACK TONE    NEUTRAL-BLACK TONE    COOL-BLACK TONE

INTERMEDIATE

1205

1206
-7 △ ~1207
▽ ~1208

WARM-BLACK TONE    NEUTRAL-BLACK TONE    COOL-BLACK TONE

HIGHLIGHT

1209

1210
-7 △ ~1211
▽ ~1212

WARM-BLACK TONE    NEUTRAL-BLACK TONE    COOL-BLACK TONE

805
CANCEL

806
OK

800

# F I G. 13

COLOR TONE ADJUSTMENT USER INTERFACE FOR BLACK-AND-WHITE PHOTOGRAPHS

PORTRAIT ▼ ～1301

1303    802    803

1310    1302

-2    ▲
      ▼

804

WARM-BLACK        NEUTRAL-BLACK        COOL-BLACK
TONE              TONE                 TONE

800    805                806

CANCEL              OK

# F I G. 14

COLOR TONE ADJUSTMENT USER INTERFACE FOR BLACK-AND-WHITE PHOTOGRAPHS

810     801     802   803

-7

WARM-BLACK TONE    NEUTRAL-BLACK TONE    COOL-BLACK TONE    804

1410   1401    1402   1403

-2

DECREASE RED HUES    0    INCREASE RED HUES    1404

805     800     806

CANCEL     OK

EP 1 798 952 A1

# F I G. 15

# FIG. 16

COLOR TONE ADJUSTMENT USER INTERFACE FOR BLACK-AND-WHITE PHOTOGRAPHS

1611    1601

C

1612  1602

M

1600    1613  1603

Y

1614    1604

K

1605    1606

CANCEL    OK

EP 1 798 952 A1

# F I G. 17

# F I G. 18

**European Patent Office**

**EUROPEAN SEARCH REPORT**

Application Number

EP 06 12 4508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | US 2005/168495 A1 (NAKATANI AKIHIKO [JP] ET AL) 4 August 2005 (2005-08-04) * paragraphs [0022], [0084], [0086], [0094], [0095], [0109] - [0126] * ----- | 1-5, 8-12,15 | INV. H04N1/46 |
| X | JP 2005 286625 A (CANON KK) 13 October 2005 (2005-10-13) * abstract; figures 1,6,7 * ----- | 1,5,8, 12,15 | |

TECHNICAL FIELDS SEARCHED (IPC)

H04N

The present search report has been drawn up for all claims

| Place of search | Date of completion of the search | Examiner |
|---|---|---|
| Munich | 27 April 2007 | DE DIEULEVEULT, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 4508

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2007

| Patent document cited in search report | Publication date | Patent family member(s) | | Publication date |
|---|---|---|---|---|
| US 2005168495 A1 | 04-08-2005 | CN | 1657297 A | 24-08-2005 |
| | | EP | 1560419 A2 | 03-08-2005 |
| JP 2005286625 A | 13-10-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050168495 A